# EUROPEAN PATENT APPLICATION

(11) **EP 4 717 956 A1**
(43) Date of publication of application: **01.04.2026**
(21) Application number: 24203389.2
(22) Date of filing: 27.09.2024
(51) Int. Cl.: F16K 17/04

(54) **PRESSURE RELIEF VALVE**

(71) Applicant: Microtecnica S.r.l., 10126 Turin (IT)
(72) Inventor: MORNACCHI, Andrea, 10126 Torino (IT); CEVOLIN, Erica Manuela, 10095 Grugliasco, Torino (IT); ROMBOLA, Federico, 89862 Drapia, VV (IT); TAFUNI, Domenico, 10122 Torino (IT)
(74) Representative: Casalonga

(57) **Abstract**

A pressure relief valve (1) for a cryogenic fluid system of an aircraft, the pressure relief valve including a valve inlet (6) for connecting the pressure relief valve to a conduit of the compressible fluid system and an intermediate chamber (10) fluidly connected to the valve inlet via a valve aperture (5). The intermediate chamber has a first frustoconical portion centred about a longitudinal axis (A). The pressure relief valve includes a valve member (2), wherein the valve member has a valve member outlet (8) and at least one channel (12), wherein the at least one channel is arranged to fluidly connect the intermediate chamber to the valve member outlet. The valve member includes a second frustoconical portion centred about the longitudinal axis. The pressure relief valve also includes a biasing member (4) to bias the valve member closed.

## Description

### FIELD

The present disclosure relates to a pressure relief valve of an aircraft, in particular a pressure relief valve including a valve member comprising channels configured to fluidly connect an intermediate chamber to a valve member outlet.

### BACKGROUND

Pressure relief valves are designed to avoid overpressure in fluid systems and may be used in cryogenic fluid systems in aircraft. During operation of a pressure relief valve in a fluid system where the fluid is a compressible fluid, the valve member opens to vent pressure. This may cause the pressure to drop around the valve member, resulting in the valve closing prematurely (e.g. before the pressure has reduced to the required level in the fluid system).

It is desired to provide a pressure relief valve that has stable characteristics when open and releasing pressure from the fluid system, to control the pressure in the system and help ensure flight safety.

### SUMMARY

According to the present disclosure, there is provided a pressure relief valve for a compressible fluid system of an aircraft, the pressure relief valve comprising:
a valve inlet for connecting the pressure relief valve to a conduit of the compressible fluid system;
an intermediate chamber fluidly connected to the valve inlet via a valve aperture, wherein the intermediate chamber comprises:
   a first frustoconical portion centred about a longitudinal axis;
      wherein the valve aperture is at a base of the first frustoconical portion; and
   an intermediate chamber wall at a first angle to the longitudinal axis; wherein the pressure relief valve further comprises:
a valve member arranged to move reciprocally to selectively open and close the valve aperture, wherein the valve member comprises:
   a valve member outlet and at least one channel;
      wherein the at least one channel is arranged to fluidly connect the intermediate chamber to the valve member outlet;
   a second frustoconical portion centred about the longitudinal axis; and
   a valve member wall at a second angle to the longitudinal axis;
      wherein the second angle to the longitudinal axis is less than the first angle to the longitudinal axis;
      wherein the pressure relief system further comprises:
      a biasing member;
   wherein the biasing member is arranged to bias the valve member towards a closed position;
   wherein the valve member is arranged to substantially close the valve aperture in the closed position.

The valve member and the biasing member are arranged to control the flow of fluid through the pressure relief valve. The biasing member is arranged to apply a force to the valve member. By applying a force to the valve member, the valve member biases the valve member towards the valve aperture.

In some examples, the compressible fluid system is a cryogenic fluid system. In some examples, the fluid in the compressible fluid system is hydrogen.

In some examples, the valve member and the valve aperture are arranged coaxially about the longitudinal axis. In some examples, the valve member and the intermediate chamber are arranged coaxially about the longitudinal axis. In some examples, the valve member and the valve inlet are arranged coaxially about the longitudinal axis. In some examples, the valve member and the biasing member are arranged coaxially about the longitudinal axis. In some examples, the valve aperture and the valve inlet are arranged coaxially about the longitudinal axis. In some examples, the valve aperture and the intermediate chamber are arranged coaxially about the longitudinal axis. In some examples, the valve aperture and the biasing member are arranged coaxially about the longitudinal axis. In some examples, the valve inlet and the intermediate chamber are arranged coaxially about the longitudinal axis. In some examples, the valve inlet and the basing member are arranged coaxially about the longitudinal axis. In some examples, the intermediate chamber and the biasing member are arranged coaxially.

In some examples, the pressure relief valve comprises a threshold actuation pressure. In some examples, the threshold actuation pressure is the pressure required in the fluid system to actuate the pressure relief valve. In some examples, the threshold actuation pressure is the pressure required to overcome the force applied to the valve member by the biasing member. By overcoming the force applied to the valve member by the biasing member, the pressure relief valve may be opened.

In some examples, the pressure relief valve is arranged to be actuated, when the pressure in the fluid system is greater than the threshold actuation pressure. In some examples, the valve member is arranged to be actuated, when the pressure in the fluid system is greater than the threshold actuation pressure. In some examples, the valve member is arranged to be actuated parallel to (e.g. along) the longitudinal axis. In some examples, the valve member is arranged to be actuated by displacement along the longitudinal axis. By displacing the valve member (e.g. parallel to the longitudinal axis), the valve aperture may be opened and fluid may flow through the valve aperture.

In some examples, the pressure relief valve is arranged to not be actuated when the pressure in the fluid system is less than the threshold pressure. By arranging the pressure relief valve to not be actuated when the pressure in the fluid system is lower than the threshold pressure, the fluid system may continue to operate without a reduction in pressure.

In some examples, the threshold actuation pressure is between 1 bar and 10 bar, e.g. between 2 bar and 8 bar, e.g. between 3 bar and 5 bar, e.g. approximately 4 bar.

In some examples, the pressure relief valve is arranged to vent a pressure from the fluid system when the pressure in the fluid system is less than a burst pressure. In some examples, the burst pressure is a (e.g. greatest) pressure at which the pressure relief valve can vent fluid from the fluid system without failure. In some examples, the burst pressure is at least 1 bar, e.g. at least 3 bar, e.g. at least 5 bar, e.g. approximately 6 bar.

In some examples, the biasing member is a spring. In some examples, the biasing member comprises a spring constant. In some examples, the spring constant of the biasing member is between 1 N/mm and 20 N/mm, e.g. between 5 N/mm and 15 N/mm, e.g. between 10 N/mm and 14 N/mm, e.g. approximately 12 N/mm.

In some examples, the valve member comprises a valve member body. In some examples, the valve member body comprises the at least one channel, e.g. extending through the valve member body. In some examples, the at least one channel is formed integrally through the valve member body. By forming the at least one channel (e.g. integrally) through the valve member body and in fluid communication with the valve member outlet and the intermediate chamber, a path may be provided for fluid to flow through the pressure relief valve.

In some examples, the pressure relief valve comprises a valve outlet. In some examples, the valve outlet is arranged in fluid communication with the intermediate chamber. By arranging the valve outlet in fluid communication with the intermediate chamber, a path may be provided for fluid to flow through the pressure relief valve.

In some examples, the intermediate chamber wall is arranged for the fluid to form a boundary layer along the intermediate chamber wall, e.g. when fluid flows into the intermediate chamber from the valve aperture when the valve member is displaced from the closed position. By forming a boundary layer along the intermediate chamber wall, instability in the operation of the pressure relief valve may be reduced.

In some examples, the valve member wall is arranged for the fluid to form a boundary layer along the valve member wall, e.g. when fluid flows into the intermediate chamber from the valve aperture when the valve member is displaced from the closed position. By forming a boundary layer along the valve member wall, instability in the operation of the pressure relief valve may be reduced.

In some examples, the first frustoconical portion is at least partly formed by the intermediate chamber wall. In some examples, the first frustoconical portion is centred on (e.g. coaxial with) the longitudinal axis. In some examples, the first frustoconical portion comprises a first truncated face, e.g. perpendicular to the longitudinal axis. In some examples, the first truncated face comprises a planar surface at a tapered end (e.g. having a smaller radius in a direction perpendicular to the longitudinal axis) of the first frustoconical portion.

In some examples, the first truncated surface is at least partly formed by the valve aperture. In some examples, the first truncated face is arranged perpendicular to the longitudinal axis. In some examples, the first truncated face is centred on the longitudinal axis.

In some examples, the second frustoconical portion is at least partly formed by the valve member wall. In some examples, the second frustoconical portion is centred on the longitudinal axis. In some examples, the second frustoconical portion comprises a second truncated face. In some examples, the second truncated face comprises a planar surface at a tapered end (e.g. having a smaller radius in a direction perpendicular to the longitudinal axis) of the second frustoconical portion.

In some examples, the second truncated face is proximal to the valve aperture. In some examples, the second truncated face is arranged perpendicular to the longitudinal axis. In some examples, the second truncated face is centred on the longitudinal axis.

In some examples, the intermediate chamber is rotationally symmetric about the longitudinal axis. In some examples, the intermediate chamber is centred on the longitudinal axis, e.g. the intermediate chamber is coaxial with the longitudinal axis. In some examples, the first frustoconical portion is rotationally symmetric about the longitudinal axis. In some examples, the first frustoconical portion is centred on the longitudinal axis, e.g. the first frustoconical portion is coaxial with the longitudinal axis.

In some examples, the valve member is rotationally symmetric about the longitudinal axis. In some examples, the valve member is centred on the longitudinal axis, e.g. the valve member is coaxial with the longitudinal axis. In some examples, the second frustoconical portion is rotationally symmetric about the longitudinal axis. In some examples, the second frustoconical portion is centred on the longitudinal axis, e.g. the second frustoconical portion is coaxial with the longitudinal axis.

In some examples, the first frustoconical portion is coaxial with the second frustoconical portion about the longitudinal axis.

In some examples, the intermediate chamber wall comprises an intermediate chamber proximal wall. In some examples, the intermediate chamber proximal wall is arranged proximal to the valve aperture. In some examples, the intermediate chamber wall comprises an intermediate chamber distal wall. In some examples, the intermediate chamber distal wall is arranged distal to the valve aperture.

In some examples, the first frustoconical portion is at least partly formed by the intermediate chamber proximal wall. In some examples, the intermediate chamber comprises a first cylindrical portion, e.g. centred on the longitudinal axis. In some examples, the first cylindrical portion is at least partly formed by the intermediate chamber distal wall.

In some examples, the valve member body comprises a valve member proximal body. In some examples, the valve member proximal body is arranged proximal to the valve aperture. In some examples, the valve member body comprises a valve member distal body. In some examples, the valve member distal body is arranged distal to the valve aperture.

In some examples, the second frustoconical portion is at least partly formed by the valve member proximal body. In some examples, the valve member distal body comprises a second cylindrical portion, e.g. centred on the longitudinal axis. In some examples, the second cylindrical portion is at least partly formed by the valve member distal body.

In some examples, the pressure relief valve comprises a valve angle, wherein the valve angle is the difference between the first angle to the longitudinal axis and the second angle to the longitudinal axis. In some examples, valve angle is between 1 and 20 degrees, e.g. between 2 and 15 degrees, e.g. between 3 and 10 degrees, e.g. approximately 5 degrees. By providing a valve angle (of, e.g., approximately 5 degrees), the rate of expansion of the fluid to fill the intermediate chamber may be controlled to form a boundary layer on one or both (e.g. each) of the intermediate chamber wall and the valve member.

In some examples, (e.g. each of) the at least one channel comprises a circular cross-section. In some examples, (e.g. each of) the at least one channel comprises a constant diameter along the length of (e.g. each of) the at least one channel. In some examples, (e.g. each) of the at least one channel comprises a prism portion. In some examples, the prism portion is cylindrical in shape.

In some examples, (e.g. each of) the at least one channel forms at least one aperture in the valve member. In some examples, (e.g. each of) the at least one aperture is in the valve member body. In some examples, (e.g. each of) the at least one aperture is in the valve member proximal body. In some examples, (e.g. each) of the at least one channel forms a channel from the valve member proximal body to the valve member outlet. By providing a channel from the valve member (e.g. valve member body (e.g. valve member proximal body) to the valve member outlet, the valve member outlet and the intermediate chamber may be fluidly connected.

In some examples, the valve member comprises a valve member face. In some examples, the second frustoconical portion comprises the valve member face. In some examples, the second truncated face forms the valve member face.

In some examples, the valve member face is proximal to the valve aperture. In some examples, the valve member face is arranged to close the valve aperture when the valve member is in the closed position. In some examples, the valve member face is arranged to close the valve aperture when the pressure in the fluid system is less than the threshold actuation pressure.

In some examples, the pressure relief valve comprises a projected chamber area, wherein the projected chamber area is the area between the valve aperture and the valve member face when the pressure relief valve is displaced from closed. In some examples, the pressure relief valve comprises a total channel area, wherein the total channel area is the total cross sectional area of the at least one channel. In some examples, the projected chamber area is substantially equal to the total channel area (e.g. with a ratio of 1). By arranging the total channel area in a ratio with the projected chamber area of 1, the fluid may flow smoothly through the intermediate chamber and the at least one channel, helping to reduce instability in the operation of the pressure relief valve.

In some examples, (e.g. each of) the at least one channels is equally spaced about the longitudinal axis. In some examples, the at least one channel comprises three channels. By spacing the at least one channels equally about the longitudinal axis, fluid may flow smoothly and evenly through the valve member.

In some examples, the diameter of the valve aperture is approximately 20mm, e.g. approximately 15mm, e.g. approximately 10mm, e.g. approximately 8mm, e.g.approximately 6mm.

In some examples, the pressure in the valve member outlet is substantially the same as the atmosphere. In some examples, the pressure in the valve member outlet is between 0.5 and 1.5 bar. In some examples, the pressure in the valve outlet is the same as the atmosphere. In some examples, the pressure in the valve outlet is between 0.5 and 1.5 bar. In some examples, the pressure in the valve outlet and the pressure in the valve member outlet are substantially equal. By arranging the pressure in the valve member outlet and/or the valve outlet to be less than the pressure in the compressible fluid system, fluid may flow through the pressure relief valve when the valve member is displaced.

In some examples, the valve member comprises at least one valve member facet. In some examples, the valve member body comprises at least one valve member facet. In some examples, the at least one valve member facet comprises a planar surface. In some examples, the at least one valve member facet is arranged parallel to the longitudinal axis. In some examples, the at least one valve member facet truncates the valve member in a radial direction from the longitudinal axis. In some examples, the at least one valve member facet truncates the valve member body in a radial direction from the longitudinal axis. In some examples, the at least one valve member facet truncates the valve member distal body in a radial direction from the longitudinal axis. In some examples, the at least one valve member facet truncates the valve member proximal body in a radial direction from the longitudinal axis.

In some examples, (e.g. each of) the at least one valve member facets is arranged circumferentially about the valve member. In some examples, (e.g. each of) the at least one valve member facets is arranged circumferentially about the valve member body. In some examples, (e.g. each of) the at least one valve member facets are equally spaced about the longitudinal axis. In some examples, the at least one valve member facet comprises three valve member facets. By arranging the valve member facets circumferentially about the valve member (e.g. valve member body) and/or equally spaced between (e.g. each of) the at least one valve member facets, the flow of fluid across the surface of the valve member (e.g. valve member body)may be controlled and a boundary layer in the fluid may form.

In some examples, the through channels and the valve member facets are equally spaced about the longitudinal axis.

In some examples, the valve aperture is rotationally symmetric about the longitudinal axis. In some examples, the valve aperture is centred on the longitudinal axis, e.g. the valve aperture is coaxial with the longitudinal axis. In some examples, the valve aperture is the aperture within (e.g. defined by) a valve inlet wall. In some examples, the valve member is arranged to abut the valve inlet wall when the valve member is biased closed. In some examples, the valve member face is arranged to abut the valve inlet wall when the valve member is biased closed.

In some examples, the pressure relief valve comprises a seal. In some examples, the seal is arranged circumferentially to (e.g. outwards of) the valve aperture. In some examples, the seal comprises a gasket. In some examples the seal (e.g. gasket) comprises an O-ring. In some examples, the seal has a greater diameter than the valve member aperture. In some examples, the valve member is arranged to abut the seal when the valve member is biased closed. In some examples, the valve member face is arranged to abut the seal when the valve member is biased closed. By providing a seal with a diameter greater than the valve aperture an improved seal between the valve member (e.g. valve member face)and the valve inlet wall may be achieved, improving stability in operation of the pressure relief valve.

### BRIEF DESCRIPTION OF FIGURES

One or more non-limiting examples will now be described, by way of example only, and with reference to the accompanying figures in which:
Figure 1 shows a cross-sectional view of a pressure relief valve; and
Figure 2a and 2b show a longitudinal view and a side view of a valve member of a pressure relief valve.

### DETAILED DESCRIPTION

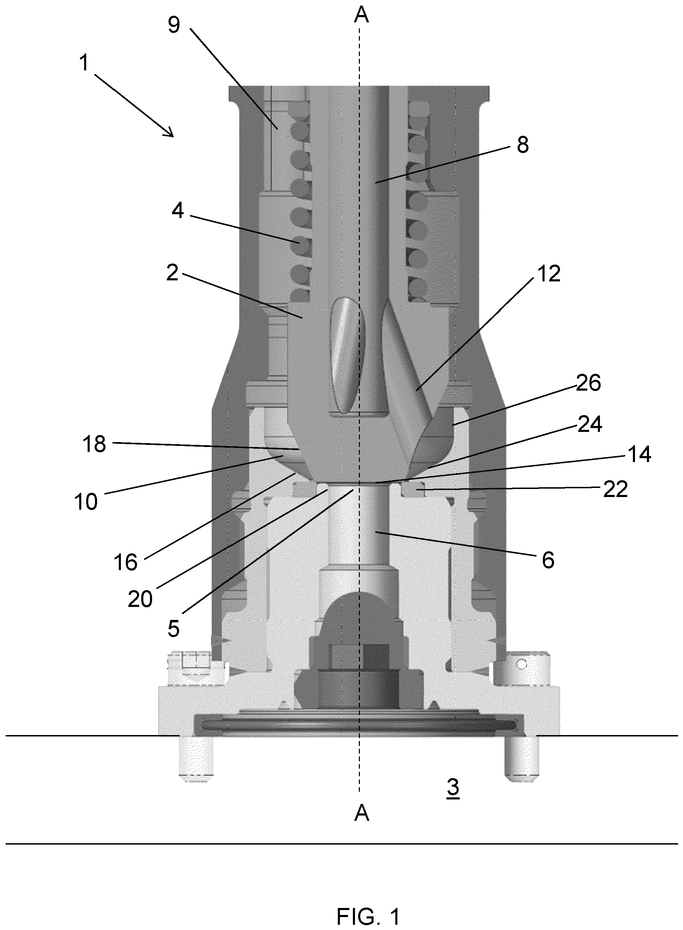

Figure 1 shows a cross-sectional view of a pressure relief valve.

The pressure relief valve 1 has a valve member 2 and a biasing member 4 that regulates the relief of pressure from a conduit 3 of a compressible fluid system of an aircraft. The pressure relief valve also has a valve inlet 6, a valve member outlet 8 and an intermediate chamber 10.

A valve aperture 5 is defined between the valve inlet 6 and the intermediate chamber 10. The biasing member 4 acts on the valve member 2, so to bias the valve member 2 towards the valve aperture 5, such that the biasing member 4 and the valve member 2 are arranged to control the flow of fluid from the valve inlet 6 into the intermediate chamber 10 via the valve aperture 5. The biasing member 4 and the valve member 2 are arranged such that below a threshold pressure value in the valve inlet 6, the biasing member 4 acts on the valve member 2 to bias it towards a closed position.

The valve member 2, the biasing member 4, the valve aperture 5, the valve inlet 6, the valve outlet 8 and the intermediate chamber 10 are, inter alia, centred on a longitudinal axis A-A.

The biasing member 4 and the valve member 2 are arranged such that when the pressure in the valve inlet 6 exceeds the threshold pressure value, the valve member 2 is displaced and fluid is able to flow from the valve inlet 6 into the intermediate chamber 10 via the valve aperture 5, reducing the pressure in the valve inlet 6 and the conduit 3 of the fluid system.

The valve member 2 comprises three through channels 12 that extend through and join together in the valve member 2. The through channels 12 connect the intermediate chamber 10 to the valve member outlet 8. When the valve member 2 is displaced from the closed position, fluid flows into the intermediate chamber 10, through the through channels 12 and through the valve member outlet 8, thus allowing excess pressure to be vented, e.g. to atmosphere.

The pressure relief valve 1 also has a valve outlet 9. The valve outlet 9 is in fluid communication with the intermediate chamber 10. When the valve member 2 is displaced from the closed position, fluid is able to flow into the intermediate chamber 10 and through the valve outlet 9. This provides a second path for fluid to flow through the pressure relief valve 1, to reduce the pressure in the conduit 3 of the fluid system when the valve member 2 is displaced from the closed position.

The valve member 2 has a valve member face 14. When the valve member 2 is in the closed position, the valve member face 14 is arranged to form a seal with the valve aperture 5, between the valve inlet 6 and the intermediate chamber 10, thus preventing the flow of fluid between the valve inlet 6 and the intermediate chamber 10. The valve aperture 5 is defined (e.g. surrounded) by a valve inlet wall 20, which also (distal from the valve aperture 5) defines the valve inlet 6. The valve aperture 5 is substantially circular. When the valve member 2 is biased closed, the valve member face 14 is arranged to abut the valve inlet wall 20 to close the valve aperture 5.

The pressure relief valve 1 also has a valve gasket 22 arranged circumferentially outwards of the valve aperture 5 and the valve inlet wall 20. The valve gasket 22 is substantially annular (e.g. toroidal) and has a diameter greater than the valve aperture 5. When the valve member 2 is biased closed, the (perimeter of the) valve member face 14 is arranged to abut the valve gasket 22, helping to provide an improved seal between the valve member face 14 and the valve inlet wall 20.

The intermediate chamber 10 has an intermediate chamber wall 16. The valve member has a valve member wall 18. The intermediate chamber wall 16 and the valve member wall 18 may be arranged such that when fluid flows into the intermediate chamber 10 from the valve inlet 6, a boundary layer forms along each of the intermediate chamber wall 16 and the valve member wall 18. The through channels 12 are also arranged to form a boundary layer along the edge of the through channels 12.

By forming a boundary layer along the intermediate chamber wall 16, the valve member wall 18 and the edge of the through channels 12, the fluid has a smooth path from the valve inlet 6 to the valve member outlet 8 and helps to prevent it becoming turbulent, which may cause instability in the operation of the pressure relief valve 1.

The intermediate chamber wall 16 comprises an intermediate chamber proximal wall 24. The intermediate chamber proximal wall 24 is arranged proximal to the valve aperture 5. The intermediate chamber wall 16 also comprises an intermediate chamber distal wall 26. The intermediate chamber distal wall 26 is arranged distal from the valve aperture 5. The intermediate chamber proximal wall 24 defines a portion of the intermediate chamber 10 that is frustoconical in shape. The intermediate chamber distal wall 26 defines a portion of the intermediate chamber 10 that is cylindrical in shape.

The intermediate chamber proximal wall 24 and the valve member wall 18 are arranged to make a first angle to the longitudinal axis A-A and a second angle to the longitudinal axis A-A respectively. The first angle to the longitudinal axis A-A (e.g. the angle between the intermediate chamber proximal wall and the longitudinal axis A-A) is approximately 50 degrees. The second angle to the longitudinal axis A-A (e.g. the angle between the valve member wall and the longitudinal axis A-A) is approximately 45 degrees. Therefore, the difference between the first angle to the longitudinal axis and the second angle to the longitudinal axis is approximately 5 degrees.

By providing an angle between the valve member wall 18 and the intermediate chamber proximal wall 24 of approximately 5 degrees, this helps a boundary layer to form in the fluid as it enters the intermediate chamber 10 from the valve aperture 5. The boundary layer forms in the fluid because the expansion of the fluid as it enters the intermediate chamber 10 from the valve aperture 5 is controlled and turbulent flow is reduced. This may result in improved stability in the operation of the pressure relief valve 1.

The operation of the pressure relief valve 1 will now be described.

Under normal operating conditions, the biasing member 4 biases the valve member 2 to close the valve aperture 5. When the pressure in the fluid system 3 exceeds the threshold actuation pressure, the valve member 2 is displaced from closing the valve aperture 5, against the biasing of the biasing member 4. Fluid is then able to flow through the valve aperture 5 into the intermediate chamber 10, forming a boundary layer within the fluid along the valve member face 18 and the intermediate chamber wall 16.

The valve outlet 9 and valve member outlet 8 are arranged to vent to atmosphere, and therefore have a pressure approximately equal to atmospheric pressure. The valve outlet 9 and the valve member outlet 8 are in fluid communication with the intermediate chamber 12, therefore the fluid flows towards the valve outlet 9 and the valve member outlet 8.

The portion of fluid that flows towards the valve member outlet 8, flows through the through channels 12 and through the valve member outlet 9. This provides a path for fluid to vent from the conduit 3 of the fluid system, causing the pressure in the fluid system to drop. The portion of the fluid that flows towards the valve outlet 9 flows directly from the intermediate chamber 12 to the valve outlet 9. Again, this provides a path for fluid to vent from the conduit 3 of the fluid system, causing the pressure in the fluid system to drop.

When the pressure in the valve inlet 6 drops below the threshold actuation pressure, the valve member 2 is biased closed by the biasing member 4 and the valve aperture 5 is closed.

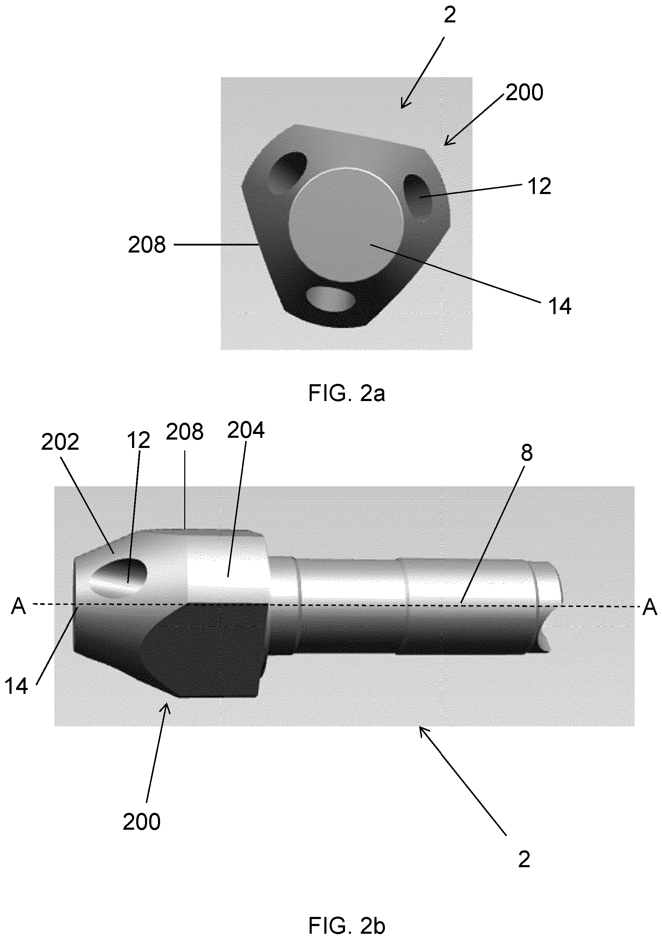

Figures 2a and 2b show a valve member of a pressure relief. Figure 2a shows a view of the valve member along the longitudinal axis A-A. Figure 2b shows a view of the valve member transverse to the longitudinal axis A-A.

The valve member 2 shown in Figures 2a and 2b may be used in the pressure relief valve 1 shown in Figure 1. The valve member 2 has a valve member body 200, which is formed from a valve member distal body 204 and a valve member proximal body 202. In use, e.g. in the pressure relief valve 1 shown in Figure 1, the valve member proximal body 202 is arranged proximal to the valve aperture 5 and the valve member distal body 204 is arranged distal to the valve aperture 5.

The valve member proximal body 202 is frustoconical in shape. The valve member distal body 204 is generally cylindrical in shape. The valve member face 14 forms one of the planar faces of the frustoconical shape of the valve member proximal body 202. The second planar face of the frustoconical shape of the valve member proximal body 202 has the same diameter as the cylindrical shape of the valve member distal body 204. The valve member proximal body 202 and the valve member distal body 204 are arranged coaxially and adjacently along the longitudinal axis A-A.

The valve member body 200 has three valve body facets 208. The valve body facets 208 are planar surfaces and are parallel to the longitudinal axis A-A. The valve body facets 208 are arranged circumferentially on the valve member body 200. The valve body facets 208 are arranged with equal spacing on the valve member body 200 about the longitudinal axis A-A. The through channels 12 are also arranged with equal spacing about the longitudinal axis A-A.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A pressure relief valve for a compressible fluid system of an aircraft, the pressure relief valve comprising:
a valve inlet for connecting the pressure relief valve to a conduit of the compressible fluid system;
an intermediate chamber fluidly connected to the valve inlet via a valve aperture, wherein the intermediate chamber comprises:
a first frustoconical portion centred about a longitudinal axis;
wherein the valve aperture is at a base of the first frustoconical portion; and
an intermediate chamber wall at a first angle to the longitudinal axis; wherein the pressure relief valve further comprises:
a valve member arranged to move reciprocally to selectively open and close the valve aperture, wherein the valve member comprises:
a valve member outlet and at least one channel;
wherein the at least one channel is arranged to fluidly connect the intermediate chamber to the valve member outlet;
a second frustoconical portion centred about the longitudinal axis; and
a valve member wall at a second angle to the longitudinal axis;
wherein the second angle to the longitudinal axis is less than the first angle to the longitudinal axis;
wherein the pressure relief system further comprises:
a biasing member;
wherein the biasing member is arranged to bias the valve member towards a closed position;
wherein the valve member is arranged to substantially close the valve aperture in the closed position.

2. The pressure relief valve as claimed in claim 1, wherein the valve member comprises a valve member body, wherein the at least one channel is formed integrally with the valve member body.

3. The pressure relief valve as claimed in claim 1 or 2, wherein the valve member comprises a valve member face;
wherein the valve member face arranged proximal to the valve member aperture.

4. The pressure relief valve as claimed in any preceding claim, wherein the pressure relief valve further comprises a valve outlet.

5. The pressure relief valve as claimed in claim 4, wherein the valve outlet is arranged in fluid communication with the intermediate chamber.

6. The pressure relief valve as claimed in any preceding claim, wherein the intermediate chamber wall is arranged for the fluid to form a boundary layer along the intermediate chamber wall.

7. The pressure relief valve as claimed in any preceding claim, wherein the valve member wall is arranged for the fluid to form a boundary layer along the valve member wall.

8. The pressure relief valve as claimed in any preceding claim, wherein the pressure relief valve comprises a valve angle, wherein the valve angle is the difference between the first angle to the longitudinal axis and the second angle to the longitudinal axis.

9. The pressure relief valve as claimed in claim 8, wherein the valve angle is 5 degrees.

10. The pressure relief valve as claimed in any preceding claim, wherein the pressure relief valve comprises a projected chamber area, wherein the projected chamber area is the area between the valve aperture and valve member face when the valve member is opened.

11. The pressure relief valve as claimed in claim 10, wherein the pressure relief valve comprises a total channel area, wherein the total channel area is a total of the cross sectional area of the at least one channel.

12. The pressure relief valve as claimed in claim 11, wherein the total channel area is equal to the projected chamber area.

13. The pressure relief valve as claimed in any preceding claim, wherein the compressible fluid system is a cryogenic fluid system.

14. The pressure relief valve as claimed in claim 13, wherein the cryogenic fluid is hydrogen.

15. The pressure relief valve as claimed in any preceding claim, wherein the at least one channel comprises three channels.
